# EUROPEAN PATENT SPECIFICATION

(11) **EP 0 568 354 B1**
(45) Date of publication and mention of the grant of the patent: **06.06.2001**
(21) Application number: 93303336.7
(22) Date of filing: 28.04.1993
(51) Int. Cl.: C09D 5/18, C08K 13/02

(54) **Fire protective coating composition**
Intumeszierende feuerschutzende Beschichtungszusammensetzung
Composition de revêtement intumescent pour la protection contre le feu

(30) Priority: 29.04.1992 US 875760
(43) Date of publication of application: 03.11.1993
(73) Proprietor: Akzo Nobel N.V., 6824 BM Arnhem (NL)
(72) Inventor: Burrel, Clive O, Ma 01852 (US); Hanafin, Joseph W., MA 01752 (US); Charpentier, Linda J., MA 02155 (US)
(74) Representative: De Vries, Adriaan Jacobus

(56) References cited:
- EP-A- 0 477 840
- EP-A- 0 531 109
- WO-A-90/09418

## Description

This invention relates generally to coatings which protect structures from damage in a fire and more particularly to intumescent mastic fire protective coatings.

Fire protective coatings are used on many structures to delay the effects of a fire. The coating slows the rate of temperature increase of the substrate to which the coating is applied. The coating thus increases the time before the structure fails due to the heat of the fire. This extra time makes it more likely that a fire brigade will be able to extinguish the fire or at least apply cooling water before the structure fails. For example, steel rapidly loses its strength and fails in a hot hydrocarbon fire. For this reason, structural steel in offshore oil drilling platforms is often coated with a fire protective coating to reduce the chance of collapse of the platform in a fire. Also, steel pressure vessels are sometimes coated with fire protective materials to reduce the chance that the vessel will rupture in a fire. If an offshore oil drilling platform were to collapse or a pressure vessel rupture, the results could be catastrophic in terms of property damage or even loss of life.

Many types of fire protective coatings are known. Concrete is one such coating, though its weight often presents a problem. Lightweight concrete materials are sometimes used, but these are also relatively heavy. As a result, even light weight concrete is poorly suited in weight sensitive applications such as offshore oil platforms. Moreover, concrete can trap moisture next to the substrate, which results in corrosion on the substrate. Intumescent coatings are much lighter than concrete and are not as likely to trap moisture next to the substrate. U.S. Patent 4, 529, 467 is an example of an intumescent coating. Intumescent coatings are sometimes called subliming, foaming or ablative coatings.

Due to these and other advantages, mastic intumescent coatings have been used as fire protective coatings for several years. Textron Specialty Materials of Lowell, Mass. USA sells one such coating under the name CHARTEK. In use, the mastic intumescent is applied to a substrate as a coating of roughly 0.5 to 3.18 cm (0.2 to 1.25 inches). The coating cures and becomes very hard and is therefore able to protect the steel substrate from damage due to water or some corrosive materials.

When a fire occurs, several reactions occur within the coating which retard the temperature rise of the substrate. The heat from the fire softens the material and triggers the release of gas. The gas causes the softened coating to swell into a foam, which converts to a foam-like char due to the heat of the fire. Gasses liberated while the char is forming also transpirationally cool the substrate.

The foam-like char formed in a fire is very hard and has a relatively high thermal resistance. Because of the high thermal resistance, it takes a long time for the substrate under the coating to heat to the point where the substrate softens or ignites. Because of its hardness, the char is not likely to be knocked off the substrate by the force of a fire. In some instances, the integrity of the char is enhanced by mesh embedded in the coating.

Intumescent mastic coatings generally contain some form of resinous binder, for example a crosslinked high temperature polymer such as an epoxy resin. The resinous binder forms the hard coating. In the case of epoxy, it also provides a source of carbon, which, in a fire, is converted to the char. An adjunct material, typically phosphorous, is usually included in the formulation to enhance the conversion of the carbonaceous element to char (as opposed to carbon dioxide or other byproducts). In addition, the coating contains additives called "spumifics" that give off gas in a fire. Melamine pyrophosphate and ammonium polyphosphate are commonly used spumifics. Inert elements such as clay and fibers made of ceramic, glass, or asbestos also have been included. They give the coating the correct viscosity and thixotropy for application and are thought to be useful in making the char harder or less likely to crack. Flame retardant additives are also included - especially if the resinous binder is inflammable. Compounds containing chlorine, phosphorous, antimony, boron, and zinc compounds are examples of common flame retardants for polymers which have been used in intumescent coatings. As described in U.S. 4,088,806 to Sawko et al., endothermic fillers may also be included in the formulation. Hydrates of zinc borate and boric acid are common endothermic fillers used in intumescent mastic coatings.

It is desirable for fire protective coatings to be more thermally efficient. Thermally efficient coatings provide protection in a fire without requiring thick coatings.

It is also sometimes desirable to have a fire protective coating which is as light as possible. For example, a moderate sized offshore oil drilling platform might be coated with 115,000kg (250,000 pounds) of intumescent mastic fire protective material. If the material could be made even 10% less dense, the weight of the coating could be reduced by over 10,000kg (twelve tons). However, a less dense material must still provide the same fire protection as denser ones.

It also is desirable to improve a commercial product so that it can be made with more readily available materials. Melamine pyrophosphate and ceramic fibers used in fire protecting coatings can be hard to procure because they are not widely used in other products. However, the materials used to replace them must not reduce the attainable fire protection.

With the foregoing background in mind it is an object of this invention to provide a mastic intumescent fire protective compound useful to protect substrates, such as steel.

It is also an object to provide a less dense fire resistive compound.

It is yet another object to provide a fire protective compound made with less expensive, more readily available materials.

The present invention provides an intumescent fire protective mastic coating composition, comprising: -
(i) a hardenable epoxy binder which provides a source of carbon and comprises from 10% to 75% by weight of the finished composition;
(ii) a curing agent for the binder;
(iii) a flame retardant not including an isocyanurate or an ammonium phosphate;
(iv) a fluxing agent in an amount of from 0.05 to 15% by weight of the finished composition;
(v) an ammonium phosphate;
(vi) a filler having a density less than 0.5g/cm³;
(vii) an isocyanurate, and
(viii) at least one non-ceramic fiber.

Other aspects and preferred features of the invention are set forth in the accompanying claims and the following description.

The intumescent fire protective mastic composition is based on a resinous epoxy binder. Epoxies are widely used as binders. Examples of suitable epoxy binders can be broadly characterized as being aliphatic, aromatic, cyclic, acyclic, alicyclic or heterocyclic. Such resins may be polyglycidyl ethers derived from such polyhydric alcohols as ethylene glycol; diethylene glycol; triethylene glycol; 1,2-propylene glycol; 1, 4-butylene glycol; 1,5-pentanediol; 1, 2, 6-hexanetriol; glycerol; trimethylolpropane; bisphenol-A (a condensation product of acetone and phenol); and Bisphenol-F (a condensation product of phenol and formaldehyde).

Also useful are the epoxide resins which are polyglycidyl ethers of polycarboxylic acids. These materials are produced by the reaction of an epoxy compound such as epichlorohydrin with an aliphatic or aromatic polycarboxylic acid such as oxalic acid; succinic acid; glutaric acid; terephthalic acid; 2, 6-naphthalene dicarboxylic acid and dimerized linoleic acid.

Still another group of epoxide resins are derived from the epoxidation of an olefinically unsaturated alicyclic material. Among these are the epoxy alicyclic ethers and esters well known in the art.

Besides the materials discussed above, useful epoxy resins also include those containing oxyalkylene groups. Such groups can be pendant from the backbone of the epoxide resin or they can be included as part of the backbone. The proportion of oxyalkylene groups in the epoxy resin depends upon a number of factors, among them, the size of the oxyalkylene group and the nature of the epoxy resin.

One additional class of epoxy resins encompasses the epoxy novolac resins. These resins are prepared by reacting an epihalohydrin with the condensation product of an aldehyde with a monohydric or polyhydric phenol. One example is the reaction product of epichlorohydrin with a phenolformaldehyde condensate. A mixture of epoxy resins can also be used herein.

Materials such as epoxidized soybean oil, dimer acid based materials, such as EMPOL 1010 (trade mark) resin which is commercially available from Emery Chemicals, and rubber modified polyepoxide resins, such as the product prepared from a polyglycidyl ether of bisphenol A, e.g. EPON 828 (trade mark) from SHELL Chemical, and an acid functional polybutadiene. A reactive curing agent is provided to convert the resin to a hard, durable material after it is applied to a substrate. In general, the curing agents which are utilized herein can be selected from a variety of conventionally known materials, for example, amine type, including aliphatic and aromatic amines, and poly(amine-amides). Examples of these include diethylene triamine; 3,3-amino bis propylamine; triethylene tetraamine; tetraethylene pentamine; m-xylylenediamine; and the reaction product of an amine and an aliphatic fatty acid, such as the series of materials sold by General Mills Chemicals, Inc. under the trademark VERSAMID.

Also suitable as curing agents are polycarboxylic acids and polycarboxylic acid anhydrides. Examples of polycarboxylic acids include di, tri-, and higher carboxylic acids such as, for example, oxalic acid, phthalic acid, terephthalic acid, succinic acid, alkyl and alkenylsubstituted succinic acids, tartaric acid, and polymerized fatty acids. Examples of suitable polycarboxylic acid anhydrides include, among others, pyromellitic anhydride, trimellitic anhydride, phthalic anhydride, succinic anhydride, and maleic anhydride.

In addition, aldehyde condensation products such as urea-, melamine-, or phenol-formaldehyde are very useful curing agents. A variety of these materials are commercially available under several trademark designations, for example, BEETLE and CYMEL from American Cyanamid and RESIMENE from Monsanto Industrial Chemicals Co.

Other suitable curing agents include boron trihalide and complexes of boron trihalide with amines, ethers and phenols; polymercaptans; polyphenols; metal salts such as aluminum chloride, zinc chloride and magnesium perchlorate; inorganic acids and partial esters such as phosphoric acid and n-butyl orthophosphite. It should be understood that blocked or latent curing agents can also be utilized if desired; for example, ketimines which are prepared from a polyamine and a ketone.

The binder accounts for between 10% and 75% by weight of the finished composition, preferably around 50% by weight. Thermoset materials are preferred, with epoxies and amido amine curinc agents being most preferred.

Various additives are dispersed in the binder. A source of carbon is included in the composition. A typical source of carbon is a polyhydric alcohol. The epoxy binder provides also a source of carbon. A further source of carbon could be an added material such as polyvinyl alcohol, starch or cellulose powder.

A char forming adjunct is included in the composition. The char forming adjunct promotes the formation of a char when the composition is exposed to fire. Lewis acids are believed to perform this function. Ammonium phosphates, preferably ammonium polyphosphate, or phosphoric acid are used. It is thought that the phosphorus dehydrates the alcohol groups in the source of carbon resulting in a char. Other char forming adjuncts could be used in addition to phosphorus containing compounds.

One or more mixtures of flame retardants is incorporated into the composition. Preferably, an isocyanurate, such as a polyisocyanurate, an ester of isocyanuric acid, or an hydroxyalkyl isocyanurate is used. Most preferably,
tris-(2-hydroxyethyl) isocyanurate (hereafter referred to as THEIC) is included. The isocyanurate is preferably at a level between 1 and 10 weight percent and more preferably between 3 and 6 weight percent. Examples of other suitable isocyanurates include tris(hydroxymethyl) isocyanurate, tris(3-hydroxy-n-propyl) isocyanurate, and triglycidyl isocyanurate. Preferably, boric acid also is included in a level preferably above 15 weight percent. Preferably an halogenated compound such as tris(2-chloroethyl)phosphate is included in a weight percentage of 5 to 15%. While this combination of flame retardants is preferred, other flame retardants could be used or the levels of some of the preferred flame retardants could be increased to compensate for the elimination of others of the preferred flame retardants. For example, phosphorus or an halogen could be reacted with the resinous binder. Alternatively, zinc borate, antimony oxide, phosphorus, an halogen or other flame retardants could be dispersed in the resinous binder. Examples of phosphorus containing flame retardants are tricresyl phosphate,
tris(2,3-dibromopropyl)phosphate, triphenyl phosphate, trioctyl phosphate, ammonium phosphate,
tris(2,3-dichloropropyl)phosphate, poly-β-chloroethyl triphosphonate mixture, tetrakis(hydroxymethyl) phosphonium sulfide,
diethyl-N,N-bis(2-hydroxyethyl)-aminomethyl phosphonate, or hydroxyalkyl esters of phosphorus acids. Examples of halogenated flame retardants are chlorinated paraffins, octabromodiphenyl ether, hexachlorocyclopentadiene derivatives, tris (2,3-dibromopropyl)phosphate, chlorendic acid, tetrachlorophthalic acid, tetrabromophthalic acid, bis-(N,N'-hydroxyethyl) tetrachlorophenylene diamine, tetrabromobisphenol A, or tris (2-chloroethyl)phosphate.

The intumescent composition also contains a spumific. The spumific provides expansion gas as it decomposes in the heat of a fire. It is desirable that the spumific give off gas at a temperature at which the resinous binder is soft but at a temperature below the temperature at which the carbonaceous char is formed. In this way, the char which is formed is expanded and is a better insulator. It is preferable that the composition contain a spumific which provides a degree of intumescence below 4 when heated according to the UL 1709 test protocol. "Degree of intumescence" means the ratio between the volume of the intumesced and unintumesced coating. Preferably, a combination of THEIC and ammonium polyphosphate (APP) is used as a spumific. The ratio of THEIC to APP is preferably between 10: and 1:10 and more preferably between 3:1 and 1: 3. However, other spumifics could be used in addition to these materials. For example, melamine, methylolated melamine, hexamethoxymethyl melamine, melamine monophosphate, melamine biphosphate, melamine polyphosphate, melamine pyrophosphate, urea, dimethylurea, dicyandiamide, guanylurea phosphate, glycine, or amine phosphate. The foregoing materials release nitrogen gas when they decompose upon exposure to heat. Compounds which release carbon dioxide or water vapor upon exposure to heat could also be used. It has been recognized that THEIC decomposes as a function of temperature very similarly to melamine, which is used as a spumific in some existing mastic intumescent materials. This allows melamine pyrophosphate to be replaced by THEIC or THEIC plus ammonium polyphosphate (APP). In contrast to melamine pyrophosphate, both THEIC and APP are widely used in applications other than mastic intumescent coatings. THEIC also provides the additional benefits of enhancing char formation and acting as a flame retardant.

Fillers which increase the hardness of the resultant char can optionally be dispersed in the resinous binder. Clay or ceramic frit may be used for this purpose, though their use increases the density of the material. Preferably, these materials are omitted from the composition.

Fibers are also added to the composition. The fibers perform two functions. They increase the thixotropic index of the composition. A high thixotropic index allows the composition, once applied, to stay in place until the resinous binder hardens. The fibers also reinforce or strengthen the char formed when the material is exposed to fire. Fibers of materials such as ceramic, asbestos, glass or mineral wool may be used in amounts ranging from 0.5% to 10% by weight. Each of these has a high thixotropic impact and a high melting temperature, such that the fibers will be able to provide reinforcement in the heat of a fire. The thixotropic index is the ratio of viscosity of a material measured when it is being stirred by a rotating blade at two different speeds, for example 1 RPM and 10 RPM. A low thixotropic impact would change this ratio by less than about 50%, for example from 1 to 1.5. A high thixotropic impact would change this ratio by greater than about 50%.

Thixotropic impact can also be determined functionally. A high thixotropic impact means that adding the fibers allows the material, when applied to a vertical steel surface at thicknesses of 7.5mm to 32mm (0.3 to 1.25 inches), to not run down the surface. If fibers of low thixotropic impact were added, the material would sag or run down the vertical surface.

To avoid drawbacks of ceramic fibers, combinations of nonceramic fibers are preferably used. A fiber with a softening point above 315°C (600°F) more preferably above 540°C (1,000°F), with a relatively low thixotropic impact may be used in combination with a relatively small amount of fiber having a softening point below 480°C (900°F) but with a high thixotropic impact.

Aramid fibers can be made to have a very high thixotropic impact such that a small amount, preferably below 2% by weight and more preferably below 0.5%, of fiber provides the desired thixotropic impact. It, however, has a low melting point and does not provide significant reinforcement in a fire. Mineral wool fiber has been found to have complementary properties. It has a low thixotropic impact, but provides good reinforcement at weight percentages preferably above 1%. It also has a softening point above 315°C (600°F) and a melting point in excess of 980°C (1,800°F). The result of using both types of fibers is adequate reinforcement at high temperatures and good thixotropic impact.

Low density fillers of various types are dispersed in the resinous binder. These fillers have a density of less than 28 pounds per cubic foot (0.5 g/cm³) more preferably less than 10 pounds per cubic foot (0.18 g/cm³). Perlite or perlite ore may be added in an amount between 0.5 and 10 weight percent, preferably between 1 and 5 weight percent. Preferably, expanded perlite having a density of around 6.2 pounds per cubic foot (0.11 g/cm³) is used. The low density filler should also be of relatively small size to allow the material to be sprayed onto a substrate. Preferably, the low density filler has a particle size of less than 1mm (0.04 inches) if the coating is to be applied by spraying. For the examples hereinafter, expanded perlite having a particle size of 97% through 30 mesh was used (particle size 0.58mm (0.023 inches)). The low density filler provides the dual advantages of decreasing the thermal conductivity of the coating and reducing the density of the material. To disperse large weight percentages of a low density filler in the composition, it may be desirable to add a wetting agent.

Endothermic fillers may also be used. These absorb heat, which prevents the heat from reaching the substrate. Boric acid, zinc borate, potassium fluoborate, ammonium fluoborate, ammonium oxalate, lead carbonate, hydrated alumina or other hydrated materials could be used.

Char promoters such as zinc borate may also be added to the composition.

Fluxing aids are also added in an amount of 0.05 to 15 weight percent, more preferably about 0.1 to 3 weight percent. The fluxing aid helps in the char formation by allowing the softened binder to flow freely as it expands due to the release of gas from the spumific. Examples of suitable fluxing aids are boric acid, boron oxide or borates such as zinc borate, sodium borate, potassium borate, ammonium borate or borate esters such as butylborates or phenylborates. The foregoing materials all contain boron. Example of fluxing aids which do not include boron are the metal oxides of titanium, molybdenum, calcium, iron, aluminum, zinc and tin.

Various materials fall into more than one of the categories listed above and the same material may be used for more than one purpose.

A preferred fire protective composition according to the invention is an epoxy based system packaged in two separate packages. Component I contains epoxy and other additives. Component II contains the curing agent and other additives. When mixed, the material may be applied to a substrate, such as structural steel. Conventional application techniques such as spraying or troweling may be used. Thereafter, it will cure into a very hard coating that will intumesce in the event of a fire. The coating is a continuous solid, as opposed to a foam which contains numerous voids.

The components are formulated separately in a commercial mixer with a high intensity shear blade and subsequently mixed to form a curable composition. The following examples give details of the ingredients and performance of fire protective materials according to the invention.

### Example I

The following ingredients were mixed to form a first component.

| COMPONENT I | | | | | |
|---|---|---|---|---|---|
| | Weight% | Mix Order | Mix Time(min) | Mix Speed(rpm) | Mix Tem(°C) |
| Epoxy Resin | 31.7 | 1 | | | |
| Halogenated | 10.3 | 2 | | | |
| Flame Retardant | | | | | |
| Black Pigment | 0.01 | 3 | | | |
| Surfactant | 0.006 | 4 | 10-15 | 750 | 27-28 |
| Ammonium | 8.79 | 5 | 10-15 | 750 | 32-33 |
| Polyphosphate Boric Acid | 21.11 | 6 | 15-20 | 1000 | 46-47 |
| Carbon Fiber | 0.53 | 7 | | | |
| Mineral Wool Fiber | 2.55 | 8 | 15-20 | 1000 | 52-54 |

Separately, the following ingredients were mixed:
21.5 wt% THEIC and 78.5 wt% amido amine at 1500 rpm at 80-90°C for 1 1/2 hours to two hours.
These components formed a master batch. The following materials were then mixed to form the second component.

| COMPONENT II | | | | | |
|---|---|---|---|---|---|
| | Weight% | Mix Order | Mix Time(min) | Mix Speed(rpm) | Mix Temp(°C) |
| Master Batch | 20.4 | 1 | | | |
| Curing Agent | 0.56 | 2 | | | |
| Accelerator | | | | | |
| Surfactant | 0.004 | 3 | | | |
| Wetting Agent | 0.16 | 4 | 15-20 | 750 | 27-28 |
| Expanded | | | | | |
| Perlite | 3.74 | 5 | 15-20 | 1000 | 43-44 |
| Aramid Fiber | 0.12 | 6 | 10-15 | 1250 | 50-52 |

The Tables of Example I are interpreted as follows: The first column lists the material. The second column lists the weight of the material as a percentage of the compound formed when component I and component II are mixed. The third column lists the mix order. A mix order of 1 means that that material is first added to the mixing vessel. A mix order of 2 means that that material is added to the mixing vessel second; and so on. The next two columns indicate the time and speed that the compound is mixed before the next material is added. There is a range of mix times because the mix time is determined partially empirically based on observation of the uniformity of the mixture and the size of the batch made. Times given are for 45kg (100 pound) batches. The final column gives the expected temperature of the compound during mixing of the material. Temperatures significantly in excess of the given temperatures may result in a defective product. Where no numbers are given for mix time, speed or temperature, no mixing was performed before the next material was added.

Component I and Component II can be stored separately without hardening. To apply a mastic coating, Component I and Component II are mixed. For testing, the mixed material was applied at a nominal thickness of 7.6mm (0.3") to a 127mm x 127mm (5" x 5") steel plate 6.35mm (.250 inches) thick. The plate was prepared by priming with a two part epoxy primer and then attaching a thermocouple to the center of the back side of the plate. A 19 gauge galvanized mesh was then attached to the front side. The front side of the plate was then coated and allowed to cure for 72 hours.

The coated plate was fitted in a fixture, leaving its coated side exposed and the fixture was placed in a furnace for a hot start fire test. According to the hot start protocol, the furnace is heated to a temperature of 1093°C (2,000°F) and then the sample is placed in the furnace. The temperature of the thermocouple connected to the sample was observed and the time required for the steel to reach 537°C (1,000°F) was recorded.

In a series of tests, the average coating thickness was measured to be 8.41mm (0.331") with a standard deviation 0.67mm of (0.0265"). The average time to 537°C (1,000°F) was measured to be 54.44 minutes with a standard deviation of 2.78 minutes.

For comparison, several samples of the aforementioned commercially available Chartek III were prepared the same way. The average thickness was 7.92mm (0.312") with a standard deviation of 0.69mm (0.027"). The average time to 537°C (1,000°F) was 56.45 minutes with a standard deviation of 5.04 minutes. The degree of intumescence of the Chartek III was 2.01.

Before firetesting, the density of the mixed material of Example I was measured to be 1.03 g/cm³ (grams per cubic centimeter). For comparison, the density of Chartek III was 1.27 g/cm³. The material exhibited a degree of intumescence of around 1.86.

In Example I, DER 331 (trade mark) epoxy resin was used. This resin is the polyglycidyl ether of a polyhydric aromatic alcohol. FYROL 99 (trade mark), a halogenated flame retardant of the form tris(2-choroethyl) phosphate sold by Akzo Chemical of Chicago, Illinois, was used. Carbon fibers sold under the brand name CELION (trade mark) were procured from BASF of Charlotte, North Carolina. Boric acid of 100% through 100 mesh particle size from U.S. Borax was used. Black pigment, such as VN6792 from Allied Resin, was used. SAG-47 which is a surfactant procured from Union Carbide was used. PHOSCHECK P-30 (trade mark) ammonium polyphosphate sold by Monsanto was used. INORPHIL (trade mark) (061-60) mineral wool fiber sold by LaxaBruk of Laxa, Sweden was used. That fiber has a relatively high softening temperature, over 590°C (1,100°F). It acts both as a thixotropic agent and as a reinforcement of the char.

THEIC is an isocyanurate in the form tris (2-hydroxyethyl) isocyanurate. It is available from BASF.

Amido amine is a curing agent. Here, ANCAMIDE (trade mark) 903 from Pacific Anchor was used. DEH 52 curing agent accelerator available from Dow Chemical was also used.

BYK 990, a wetting agent available from BYK-Chemie USA, was used.

Expanded perlite is a volcanic glass with a relatively low density. Here, PFF-65 from Penn Perlite Corporation was used.

ULTRATHIX (trade mark) manmade aromatic amide fiber sold by Dupont was used. It acts as a thixotropic agent to prevent the material from sagging or running when applied. Its melting temperature is about 315°C (600°F) and provides little reinforcement of the char. Even though INORPHIL (trade mark) is a thixotropic agent as well as a reinforcing fiber, it is not as efficient a thixotrope as ULTRATHIX (trade mark). By using both fibers, appropriate thixotropy and reinforcement can be obtained without requiring an excessive total amount of fiber.

### Example II

The following tables list ingredients in an alternative formulation. The tables are interpreted as in Example I.

| COMPONENT I | | | | | |
|---|---|---|---|---|---|
| | Weight% | Mix Order | Mix Time(min) | Mix Speed(rpm) | Mix Temp(°C) |
| Epoxy Resin | 28.81 | 1 | | | |
| Halogenated | 10.21 | 2 | | | |
| Flame Retardant | | | | | |
| Black Pigment | 0.006 | 3 | | | |
| Surfactant | 0.016 | 4 | 10-15 | 750 | 27-28 |
| Flame Retardant | | | | | |
| /Spumific | 11.19 | 5 | 10-15 | 1000 | 32-33 |
| Spumific | | | | | |
| Boric Acid | 21.61 | 6 | 10-15 | 1000 | 40-41 |
| Carbon Fiber | 0.55 | 7 | 10-15 | 1000 | 46-47 |
| Mineral Wool | 2.6 | 8 | 10-15 | 1000 | 52-54 |
| Fiber | | | | | |

| COMPONENT II | | | | | |
|---|---|---|---|---|---|
| | Weight% | Mix Order | Mix Time(min) | Mix Speed(rpm) | Mix Temp(°C) |
| Amido Amine | 19.38 | 1 | | | |
| Curing Agent | 0.69 | 2 | | | |
| Accelerator | | | | | |
| Surfactant | 0.005 | 3 | | | |
| Wetting Agent | 0.19 | 4 | 15-20 | 750 | 24-25 |
| Perlite Ore | 4.52 | 5 | 15-20 | 1000 | 38-39 |
| Aramid Fiber | 0.21 | 6 | 10-15 | 1250 | 42-44 |

Component I and Component II were prepared separately. They were then combined and applied to a steel plate and fire tested as in Example I. The coated plates had an average thickness of 7.87mm (0.31") with a standard deviation of 0.50mm (0.0196"). A series of tests had a mean time to 537°C (1,000°F) of 60.75 minutes and a standard deviation of 3.96.

Prior to firetesting, it was estimated that the cured material had a density of 1.27 g/cm³.

For the fire retardant/spumific IFR-23, which contains THEIC, ammonium polyphosphate and Polytetrafluoroethylene was procured from Hoechst Celanese. Perlite Ore from Penn Perlite was used.

### Example III

The following tables list ingredients in an alternative formulation. The tables are interpreted as in Example I.

| COMPONENT I | | | | | |
|---|---|---|---|---|---|
| | Weight% | Mix Order | Mix Time(min) | Mix Speed(rpm) | Mix Temp(°C) |
| Epoxy Resin | 30.06 | 1 | | | |
| Halogenated | 11.16 | 2 | | | |
| Flame Retardant | | | | | |
| Black Pigment | 0.006 | 3 | | | |
| Surfactant | 0.02 | 4 | 10-15 | 750 | 27-28 |
| Flame Retardant | | | | | |
| /Spumific | 10.54 | 5 | 10-15 | 1000 | 32-33 |
| Boric Acid | 19.63 | 6 | 10-15 | 1000 | 40-41 |
| Carbon Fiber | 0.52 | 7 | 10-15 | 1000 | 46-47 |
| Mineral Wool | 3.1 | 8 | 10-15 | 1000 | 52-54 |
| Fiber | | | | | |

| COMPONENT II | | | | | |
|---|---|---|---|---|---|
| | Weight% | Mix Order | Mix Time(min) | Mix Speed(rpm) | Mix Temp(°C) |
| Amido Amine | 16.34 | 1 | | | |
| Curing Agent | 0.6 | 2 | | | |
| Accelerator | | | | | |
| Surfactant | 0.005 | 3 | | | |
| Wetting Agent | 0.17 | 4 | 15-20 | 750 | 24/25 |
| Expanded | 3.93 | 5 | 15-20 | 1000 | 38/39 |
| Perlite | | | | | |
| Mineral Wool | 3.96 | 6 | 10-15 | 1250 | 42/44 |
| Fiber | | | | | |

Component I and Component II were mixed separately. They were then combined and applied to a steel plate and fire tested as in Example I. A series of tests had a mean time to 537°C (1,000°F) of 58.4 minutes and a standard deviation of 2.88 minutes at an average thickness of 8.38mm (0.33 inches)with a standard deviation of 0.74 mm (0.029 inches). However, the composition of the example is not most preferred because it exhibited poor performance on larger samples.

Prior to firetesting, the cured material had a density of 1.03 g/cm³.

### Example IV

The following tables list ingredients in an alternative formulation. The tables are interpreted as in Example I.

| COMPONENT I | | | | | |
|---|---|---|---|---|---|
| | Weight% | Mix Order | Mix Time(min) | Mix Speed(rpm) | Mix Temp(°C) |
| Epoxy Resin | 29.25 | 1 | | | |
| Halogenated | 10.31 | 2 | | | |
| Flame Retardant | | | | | |
| Black Pigment | 0.007 | 3 | | | |
| Surfactant | 0.01 | 4 | 10-15 | 750 | 27-28 |
| Flame Retardant | | | | | |
| /Spumific | 11.62 | 5 | 10-15 | 1000 | 32-33 |
| Boric Acid | 20.25 | 6 | 10-15 | 1000 | 40-41 |
| Carbon Fiber | 0.55 | 7 | 10-15 | 1000 | 46-47 |
| Mineral Wool | 3.0 | 8 | 10-15 | 1000 | 52-54 |
| Fiber | | | | | |

| COMPONENT II | | | | | |
|---|---|---|---|---|---|
| | Weight% | Mix Order | Mix Time(min) | Mix Speed(rpm) | Mix Temp(°C) |
| Amido Amine | 16.34 | 1 | | | |
| Curing Agent | 0.6 | 2 | | | |
| Accelerator | | | | | |
| Surfactant | 0.005 | 3 | | | |
| Wetting Agent | 0.17 | 4 | 15-20 | 750 | 24-25 |
| Expanded | 3.93 | 5 | 15-20 | 1000 | 38-39 |
| Perlite | | | | | |
| Mineral Wool | 3.96 | 6 | 10-15 | 1250 | 42-44 |
| Fiber | | | | | |

Component I and Component II were mixed separately. They were then combined and applied to a steel plate and fire tested as in Example I. The density of the material prior to fire test was computed to be 1.03 g/cm³.

A series of tests had a mean time to 537°C (1,000°F) of 63.13 minutes with a standard deviation of 1.88 at an average thickness of 8.0mm (0.315 inches) with a standard deviation of 0.18mm (0.007 inches). Several advantages of the compositions of the invention will be apparent from the examples. The composition of the Examples can be made to have a density below 1.1 g/cm³ and is about 20% less dense than existing materials. The material of Examples I and II is nearly as thermally efficient, while the material of the other examples is more thermally efficient than existing materials. Material of the examples will provide a 1 hour UL 1709 rating on 10W49 steel girders at a weight of less than 0.86 grams per square centimeter. A 2 hour rating under UL 1709 could be obtained at a weight of less than 1.5 grams per square centimeter.

One, two, and three hour ratings could be obtained under the UL 263 test at weights of less than 0.53 g/cm2, 1.0 g/cm2, and 1.54 g/cm2, respectively. Using the more thermally efficient formulations of the examples, UL 263 and UL 1709 ratings for the times given above could be obtained at weights that are more than 10% less than the weights given above.

This low weight is provided by a solid coating, as opposed to a foam which contains voids or low density cells prior to a fire. A solid coating is more resistant to physical damage than a foam and is more likely to better protect the substrate against damage caused by water or exposure to corrosive chemicals.

Further, the material of the invention can be applied in the same manner with the same equipment used to apply existing mastic fire resisting materials.

Having described various embodiments of the invention, alternative embodiments could be constructed without departing from the invention. Accordingly, the invention should be limited only by the scope of the appended claims.

## Claims

1. An intumescent fire protective mastic coating composition, comprising: -
(i) a hardenable epoxy binder which provides a source of carbon and comprises from 10% to 75% by weight of the finished composition;
(ii) a curing agent for the binder;
(iii) a flame retardant not including an isocyanurate or an ammonium phosphate;
(iv) a fluxing agent in an amount of from 0.05 to 15 % by weight of the finished composition;
(v) an ammonium phosphate;
(vi) a filler having a density less than 0.5g/cm³;
(vii) an isocyanurate, and
(viii) at least one non-ceramic fiber.

2. A composition according to claim 1, characterised by further comprising a wetting agent adapted to aid in dispersing the filler in the coating composition.

3. A composition according to claim 1 or 2, characterised in that the filler, when expanded, has a density less than 0.18g/cm³.

4. A composition according to claim 1, 2 or 3, characterised in that the filler has a particle size of less than 1 mm (0.04 inches).

5. A composition according to any one of claims 1 to 4, characterised in that the filler is expanded perlite.

6. A composition according to any one of claims 1 to 5, characterised in that the isocyanurate is selected from the group consisting of esters of isocyanuric acid, polyisocyanurates and hydroxyalkyl isocyanurates.

7. A composition according to any one of claims 1 to 6, characterised in that the curing agent for the binder is selected from the group consisting essentially of aliphatic and aromatic amines, polycarboxylic acids, polycarboxylic acid anhydrides, aldehyde condensation products, complexes of boron trihalide with amines, ethers and phenols, polymercaptans, polyphenols, metal salts, and inorganic acids and partial esters.

8. A composition according to claim 1, characterised in that the fluxing agent is boric acid, the ammonium phosphate is ammonium polyphosphate, the filler is perlite, and the isocyanurate is tris-(2-hydroxyethyl) isocyanurate.

9. A composition according to claim 1, characterised in that the coating gives a one hour UL263 rating when applied at a weight of less than 0.53g/cm² to a 10W49 steel girder.

10. A composition according to claim 1, characterised in that the coating gives a two hour UL263 rating when applied at a weight of less than 1.0g/cm² to a 10W49 steel girder.

11. A composition according to claim 1, characterised in that the coating gives a three hour UL263 rating when applied at a weight of less than 1.54g/cm² to a 10W49 steel girder.

12. A composition according to claim 1, characterised in that the coating gives a one hour UL1709 rating when applied at a weight of less than 0.86g/cm² to a 10W49 steel girder.

13. A composition according to claim 1, characterised in that the coating gives a two hour UL1709 rating when applied at a weight of less than 1.5g/cm² to a 10W49 steel girder.

14. A composition according to claim 1 or 2, characterised in that the non-ceramic fiber includes one or more fibers selected from the group consisting of mineral wool fiber and aramid fiber.

15. A composition according to claim 14, characterised by including carbon fiber.

## Patentansprüche

1. Intumeszierende feuerschützende Mastix-Beschichtungszusammensetzung, umfassend:
(i) ein härtbares Epoxy-Bindemittel, das eine Kohlenstoffquelle bereitstellt und das zwischen 10 Gew.% und 75 Gew.% in der fertiggestellten Zusammensetzung enthalten ist;
(ii) ein Härtungsmittel für das Bindemittel;
(iii) einen Flammenverzögerer, der kein Isocyanurat oder Ammoniumphosphat umfaßt;
(iv) ein Flußmittel in einer Menge von 0,05 bis 15 Gew.%, bezogen auf die fertiggestellte Zusammensetzung;
(v) ein Ammoniumphosphat;
(vi) ein Füllmittel mit einer Dichte kleiner als 0,5 g/cm³;
(vii) ein Isocyanurat; und
(viii) mindestens eine nicht keramische Faser.

2. Zusammensetzung nach Anspruch 1, dadurch gekennzeichnet, daß sie weiter ein Benetzungsmittel umfaßt, das derart angepaßt ist, daß die Dispergierung des Füllmittels in der Beschichtungszusammensetzung unterstützt wird.

3. Zusammensetzung nach Anspruch 1 oder 2, dadurch gekennzeichnet, daß das Füllmittel im expandierten Zustand eine Dichte weniger als 0,18 g/cm³ aufweist.

4. Zusammensetzung nach Anspruch 1, 2 oder 3, dadurch gekennzeichnet, daß das Füllmittel eine Teilchengröße weniger als 1 mm (0,04 Inch) aufweist.

5. Zusammensetzung nach einem der Ansprüche 1 bis 4, dadurch gekennzeichnet, daß das Füllmittel expandiertes Perlite ist.

6. Zusammensetzung nach einem der Ansprüche 1 bis 5, dadurch gekennzeichnet, daß das Isocyanurat aus der Gruppe ausgewählt ist, die Ester der Isocyanursäure, Polyisocyanurate und Hydroxyalkyl-Isocyanurate umfaßt.

7. Zusammensetzung nach einem der Ansprüche 1 bis 6, dadurch gekennzeichnet, daß das Härtemittel für das Bindemittel aus der Gruppe ausgewählt ist, die im wesentlichen aliphatische und aromatische Amine, Polycarboxylsäuren, Polycarboxylsäureanhydride, Aldehyd-Kondensationsprodukte, Komplexe aus Bortrihalogenide mit Aminen, Ether und Phenole, Polymercaptane, Polyphenole, Metallsalze und anorganische Säuren und partielle Ester umfaßt.

8. Zusammensetzung nach Anspruch 1, dadurch gekennzeichnet, daß das Flußmittel Borsäure, das Ammoniumphosphat ein Ammoniumpolyphosphat, das Füllmittel Perlite und daß das Isocyanurat ein Tris-(2-hydroxyethyl)isocyanurat ist.

9. Zusammensetzung nach Anspruch 1, dadurch gekennzeichnet, daß die Beschichtung eine einstündige UL263-Bewertung ergibt, wenn sie mit einem Gewicht von weniger als 0,53 g/cm² auf einen 10W49 Stahlträger aufgebracht wird.

10. Zusammensetzung nach Anspruch 1, dadurch gekennzeichnet, daß die Beschichtung eine zweistündige UL263-Bewertung ergibt, wenn sie mit einem Gewicht von weniger als 1,0 g/cm² auf einen 10W49 Stahlträger aufgebracht wird.

11. Zusammensetzung nach Anspruch 1, dadurch gekennzeichnet, daß die Beschichtung eine dreistündige UL263-Bewertung ergibt, wenn sie mit einem Gewicht von weniger als 1,54 g/cm² auf einen 10W49 Stahlträger aufgebracht wird.

12. Zusammensetzung nach Anspruch 1, dadurch gekennzeichnet, daß die Beschichtung eine einstündige UL1709-Bewertung ergibt, wenn sie mit einem Gewicht von weniger als 0,86 g/cm² auf einen 10W49 Stahlträger aufgebracht wird.

13. Zusammensetzung nach Anspruch 1, dadurch gekennzeichnet, daß die Beschichtung eine zweistündige UL1709-Bewertung ergibt, wenn sie mit einem Gewicht von weniger als 1,5 g/cm² auf einen 10W49 Stahlträger aufgebracht wird.

14. Zusammensetzung nach Anspruch 1 oder 2, dadurch gekennzeichnet, daß die nicht keramische Faser eine Faser oder mehrere Fasern umfaßt, die aus der Gruppe ausgewählt ist, die Mineralwollfaser und Aramidfaser umfaßt.

15. Zusammensetzung nach Anspruch 14, dadurch gekennzeichnet, daß sie eine Kohlenstoff-Faser umfaßt.

## Revendications

1. Composition de revêtement de type mastic pare-feu intumescent, comprenant :
(i) un liant époxy durcissable qui apporte une source de carbone et constitue de 10 à 75 % en poids de la composition finie ;
(ii) un agent durcisseur pour le liant ;
(iii) un retardateur d'inflammation ne contenant pas d'isocyanurate ou de phosphate d'ammonium ;
(iv) un agent plastifiant en une quantité de 0,05 à 15 % en poids par rapport à la composition finie ;
(v) un phosphate d'ammonium ;
(vi) une charge ayant une masse volumique inférieure à 0,5 g/cm³ ;
(vii) un isocyanurate ; et
(viii) au moins une fibre non céramique.

2. Composition selon la revendication 1, caractérisée en ce qu'elle comprend en outre un agent mouillant adapté pour faciliter la dispersion de la charge dans la composition de revêtement.

3. Composition selon la revendication 1 ou 2, caractérisée en ce que la charge, quand elle est expansée, a une masse volumique inférieure à 0,18 g/cm³.

4. Composition selon la revendication 1, 2 ou 3, caractérisée en ce que la charge a une granulométrie inférieure à 1 mm (0,04 pouce).

5. Composition selon l'une quelconque des revendications 1 à 4, caractérisée en ce que la charge est de la perlite expansée.

6. Composition selon l'une quelconque des revendications 1 à 5, caractérisée en ce que l'isocyanurate est choisi dans l'ensemble constitué par les esters d'acide isocyanurique, les polyisocyanurates et les isocyanurates d'hydroxyalkyle.

7. Composition selon l'une quelconque des revendications 1 à 6, caractérisée en ce que l'agent durcisseur pour le liant est choisi dans l'ensemble constitué principalement des amines aliphatiques et aromatiques, des acides polycarboxyliques, des anhydrides d'acide polycarboxylique, des produits de condensation d'aldéhyde, des complexes de trihalogénure de bore avec des amines, des éthers et des phénols, des polymercaptans, des polyphénols, des sels métalliques, et des acides minéraux et de leurs esters partiels.

8. Composition selon la revendication 1, caractérisée en ce que l'agent plastifiant est l'acide borique, le phosphate d'ammonium est le polyphosphate d'ammonium, la charge est la perlite, et l'isocyanurate est l'isocyanurate de tris(2-hydroxyéthyle).

9. Composition selon la revendication 1, caractérisée en ce que le revêtement donne une note UL263 d'une heure quand il est appliqué à un poids inférieur à 0,53 g/cm² à une poutre en acier 10W49.

10. Composition selon la revendication 1, caractérisée en ce que le revêtement donne une note UL263 de deux heures quand il est appliqué à un poids inférieur à 1,0 g/cm² à une poutre en acier 10W49.

11. Composition selon la revendication 1, caractérisée en ce que le revêtement donne une note UL263 de trois heures quand il est appliqué à un poids inférieur à 1,54 g/cm² à une poutre en acier 10W49.

12. Composition selon la revendication 1, caractérisée en ce que le revêtement donne une note UL1709 d'une heure quand il est appliqué à un poids inférieur à 0,86 g/cm² à une poutre en acier 10W49.

13. Composition selon la revendication 1, caractérisée en ce que le revêtement donne une note UL1709 de deux heures quand il est appliqué à un poids inférieur à 1,5 g/cm² à une poutre en acier 10W49.

14. Composition selon la revendication 1 ou 2, caractérisée en ce que les fibres non céramiques comprennent une ou plusieurs fibres choisies dans l'ensemble constitué par les fibres de laine minérale et les fibres d'aramide.

15. Composition selon la revendication 14, caractérisée en ce qu'elle comprend des fibres de carbone.
